Europäisches Patentamt

European Patent Office

Office européen des brevets

(11) Publication number: **0 321 066 B1**

## EUROPEAN PATENT SPECIFICATION

(45) Date of publication of patent specification: **15.07.92** (51) Int. Cl.5: **C02F 5/10**, C02F 1/20

(21) Application number: **88303437.3**

(22) Date of filing: **15.04.88**

(54) **All-in-one boiler water treatment composition.**

(30) Priority: **16.12.87 US 133504**

(43) Date of publication of application:
**21.06.89 Bulletin 89/25**

(45) Publication of the grant of the patent:
**15.07.92 Bulletin 92/29**

(84) Designated Contracting States:
**AT BE CH DE ES FR GB GR IT LI LU NL SE**

(56) References cited:
**US-A- 4 443 340**

**POWER, June 1987, Mc-Graw-HillPublication
SHELDON D. STRAUSS et al. "Boiler Water
Treatment" pages S1-S16**

(73) Proprietor: **Diversey Corporation
201 City Centre Drive
Mississauga Ontario L5B 2Z9(CA)**

(72) Inventor: **Steimel, Llye H.
1117 Imprint
Forest Park Ohio(US)**
Inventor: **Christensen, Ronald J.
8747 Tanagerwoods Drive
Montgomery Ohio(US)**

(74) Representative: **Allen, Oliver John Richard et al
Lloyd Wise, Tregear & Co. Norman House
105-109 Strand
London, WC2R 0AE(GB)**

**Description**

A boiler requires extremely pure water in order to avoid a plurality of different problems. Unfortunately water available for most boilers is not pure enough to avoid these problems. Untreated water would rapidly damage the boiler eventually destroying it.

Currently there are a variety of different physical and chemical treatments for boiler water. BOILER WATER TREATMENT an article from the magazine Power, June, 1987, p. S1-S16 describes many of these different treatments. Further, "Chemical Treatment Options For Steam Generation" in the same magazine February of 1982, p. 93-97 discusses similar treatments and solutions. Some of the problems defined by these papers are scale, pH, pitting by oxygen and carbonic acid formed from carbon dioxide.

Phosphates are typically used as an internal treatment for scale prevention in boilers. Basically this forms a sludge that is easily removed. Other scale preventers includes low molecular weight polymers generally in combination with phosphates and the like. Polymethacrylates and polyacrylates having molecular weights around 4500 have also been used for scale. These act not only to prevent scale formation but also in certain applications can act as descalants. Polymaleic acid is also employed.

Oxygen pitting is typically solved by removal of oxygen in the make-up water. A large amount of oxygen dissolved in water can be removed by physical treatment, dearation. Subsequent chemical treatment by oxygen scavengers is then required to remove the last traces of oxygen. There are several different oxygen scavengers. Hydrazine is a commonly employed scavenger. Unfortunately, generated steam containing hydrazine is unsuitable for applications where the steam may contact food. Other less dangerous chemicals typically used include sulfites such as sodium sulfite and erythorbic acid. The use of this composition is disclosed for example in U.S. Patent 4,419,327. It is also known to use ascorbic acid but this treatment is not commonly employed.

There are various volatile amines which have been used for condensate treatment. These include ammonium hydroxide which is incompatible with any kind of copper surface. Cyclohexamine has been used but is not compatible with a highly alkaline carbonate system. Morpholine exhibits a low distribution ratio and would protect the short steam system however medium to long condensate lines would not be protected. Octadecylamine is a filming amine and diethylaminoethanol is another amine used to treat condensate systems.

Other chemicals used to treat boiler water include sodium hydroxide which increases alkalinity and precipitates magnesium, sodium carbonate which also increases alkalinity and precipitates calcium, and magnesium, chelants such as ethylenediaminetetraacetic acid, tannins, starches, lignins, carboxymethylcellulose which prevents feed line deposits, sodium nitrate which inhibits caustic embrittlement and antifoaming agents.

These many different chemical treatment agents are generally applied separately at separate locations along the boiler system. Incompatibility of concentrated solutions of these treatment agents has generally prevented formulation of all-in-one treatments which would be stored and shipped in concentrated form and applied at use dosages.

The general object of the invention is to provide an all-in-one treatment composition which provides a balanced scale prevention and removal, sludge treatment, oxygen scavenging, metal passivation, condensate treatment as well as iron and magnesium control.

A concentrated all-in-one boiler water treatment composition in accordance with the invention is characterised in that it comprises, by weight,

| | |
|---|---|
| Glucoheptonate | 0% to 0.2% |
| Sulfite | 0.1% to 14% |
| Polyhydroxy acid | 0.1 to 5% |
| Diethylaminoethanol | 0.0 to 15.0% |
| 1st polymer | 0.1 to 4% |
| Polymaleate | 0.01 to 4% |
| Carbonate | 0 to 7% |
| Water soluble base | 0 to 20% |
| Water | to 100% |

the sulfite being sodium or potassium sulfite; the 1st polymer is a polymethacrylate or polyacrylate; the carbonate is sodium carbonate or potassium carbonate and the polyhydroxy acid is an ascorbic acid or erythorbic acid.

Such a composition includes an alkalinity control agent, condensate treatment particularly diethylaminoethanol, oxygen scavengers particularly sodium sulfite and a polyhydroxy acid. Further, the composition preferably includes a polymer system including a water soluble polymethacrylate and water soluble polymaleic acid, both neutralized in this system.

Such a composition can be provided at high concentrations for storage and application and is effective at use concentrations.

Preferably the composition comprises, by weight,

| Sodium Glucoheptonate | 0.01 to 0.2% |
| Sodium Sulfite | 1.0 to 10% |
| Sodium Carbonate | 0.01 to 7% |
| Ascorbic Acid | 0.1 to 5% |
| Polymethacrylate having a molecular weight of 500-5000 | 0.1 to 4% |
| Polymaleate acid having a molecular weight of 500-1000 | 0.1 to 4% |
| Diethylaminoethanol | 0.1 to 15% |
| Sodium hydroxide | 10 to 20% |
| Water | to 100% |

The invention will now be further described by way of example with reference to the accompanying examples.

A carbonate cycle treatment composition in accordance with the invention includes an oxygen scavenging system, a condensate treatment, a hardness and scale prevention and removal system as well as an iron control agent. These are mixed and stored as a concentrated aqueous mixture and added to the boiler water to provide effective treatment.

The following description provides the desired use concentrations of each component of this system. The all-in-one treatment composition is formed by adding concentrated forms of these components at relative concentrations so that the formulated treatment composition can be dispensed into the boiler water and attain the desired use concentrations for all of these components. The actual amount of each chemical added to the concentrated formulations depends on the precise intended use concentrations and the concentration of each chemical when purchased.

The oxygen scavenging/condensate control mechanism is a three component system. The system includes a sulfite, a polyhydroxy acid and diethylaminoethanol. Effective sulfites include sodium and potassium sulfite and sodium and potassium bisulfite. The use concentration of sodium or potassium sulfite should range from about 20 to about 60 ppm. Since the sulfite is consumed, the concentrated solution will include a slight excess of sulfite, generally 45 to 90 ppm is applied.

The polyhydroxy acid is a water soluble acid preferably erythorbic acid or ascorbic acid. Ascorbic acid is preferred over erythorbic acid since it acts synergistically with the diethylaminoethanol to provide effective oxygen scavenging.

The concentration of polyhydroxy acid should be from about 1 to about 40 parts per million. Again, ascorbic acid is consumed in the boiler. So a slight excess is applied generally up to 100 ppm with 10-20 ppm preferred. Sufficient DEAE is provided to neutralize the acid and to provide a condensate pH of 7.5-8.5. To provide both condensate treatment and neutralization of the acid generally 1-200 ppm DEAE is required. Preferably the use concentration will be 25 to 50 ppm. If no condensate treatment is necessary, the DEAE need not be included.

The hardness control is provided through three components. The first of these components is sodium carbonate or potassium carbonate which reacts with the hardness to form calcium carbonate which can easily be removed. For use in the present invention, there should be from about 20 to about 500 parts per million of potassium or sodium carbonate. Some carbonate can be provided by the natural water so slightly less carbonate is applied. Thus, the applied concentration should range from 0 ppm to 500 ppm.

In addition to this, a first and a second low molecular weight polymer should be employed. The first polymer is preferably the sodium neutralized salt of polymethacrylate or polyacrylate having a molecular weight of from 500 to 5000. The second polymer is preferably a polymaleate having a molecular weight of from 500 to 1000.

The polymethacrylates and polyacrylates can be obtained in a wide range of molecular weights, but generally the molecular weight should range from 500 to 5000 with 4500 being preferred. The most preferred is polymethacrylate having a pH of about 11.5 with a molecular weight of about 4500. This is employed at about 1 to 80 parts per million with 12-24 ppm being preferred.

EP 0 321 066 B1

The polymaleate is added as polymaleic acid and is neutralized in the solution to form the corresponding sodium or potassium polymaleate. The polymaleate can have a molecular weight generally from about 500 to 1000 with 750 being the preferred molecular weight. This is used at a concentration of 1 to 80 parts per million with about 5-10 parts per million being preferred.

The composition of the present invention includes a glucoheptonate, preferably a sodium or potassium glucoheptonate to transport iron out of the system. This would be used at a range of 0 to 10 parts per million with 1-2 parts per million being preferred.

The composition also includes a water soluble base generally sodium or potassium hydroxide if needed to bring the pH of the boiler water to about 11-11.5. Generally the concentrate will include 10-15% sodium hydroxide depending on the pH of the make up of water in the boiler.

Generally the concentrated form of this treatment composition includes as actives by weight

| DEAE | 0 to 15% |
| Polymaleate | 0.1 to 4% |
| Polymethacrylate | 0.1 to 4% |
| Polyhydroxy acid | 0.1 to 5% |
| Soda Ash | 0 to 7% |
| Sulfite | 1 to 14% |
| Glucoheptonate | 0 to 0.2% |
| Water soluble base | 0 to 15% |
| Water | to 100% |

Where the condensate treatment is needed, at least 0.1% DEAE should be present in the concentrate.

The preferred formulation is, by weight,

| Water | 77.6% |
| Sodium hydroxide | 8.5% |
| DEAE | 2.6% |
| Polymaleate | 0.5% |
| Polymethacrylate | 1.2% |
| Ascorbic Acid | 0.5% |
| $Na_2CO_3$ | 4.5% |
| Sodium Sulfite | 4.5% |
| Sodium Glucoheptonate | 0.1% |

This concentrated formulation is formed by simply mixing the components.

The boiler water composition of the present invention is used at the above use concentrations. In its concentrated form, it is generally about 80-90% water. It is dispensed periodically to the boiler water to provide the concentrations as listed above. Generally 1000 to 2000 ppm of this formulation is added to and maintained in the boiler. This treatment is useful in low pressure applications generally in boilers operating at less than 250 psi ($1.7 \times 10^6$ N/m$^2$)

The present invention will be further appreciated in light of the following detailed examples wherein a boiler water treatment composition having the preferred formulated as tested previously listed was used in field tests to treat the boilers as described below.

Example 1

The above preferred formulation was used to treat three five hundred horse power (370 kW) boilers having a 50% condensate return operating at 12 psi (82 kN/m$^2$) with continuous blow down. The make up water has an M alkalinity as $CaCO_3$ of 52mg/l, a total hardness of $CaCO_3$ of less than 1mg/l, chloride at 25mg/l, sulfate at 89mg/l and a conductance of 378 with a pH of 7.2. The water conditions of the steam boiler and condensate from week 1 to week 8 were as follows:

4

TABLE I

| Date | Makeup Dosage mg/l | Cycles | % Condensate Return | Condensate pH | Fe mg/l | lb.(kg) SO₃ | Treatment Composition |
|---|---|---|---|---|---|---|---|
| Week 1 Day 1 | 647 | 3.77 | 86% | 8.3 | 0.05 | 1.5 (0.7) | 1qt.(1.1 litre) |
| Week 3 Day 3 | 683 | 3.4 | 91% | 8.1 | 0.6 | 1/4 (0.1) | 1qt.(1.1 litre) |
| Week 5 Day 2 | 319 | 3.8 | 73.6% | 8.4 | 0.03 | 0 | 1qt.(1.1 litre) |
| Week 6 Day 2 | 303 | 6.17 | 90% | 8.4 | 0.01 | 2 (0.9) | 1qt.(1.1 litre) |
| Week 8 Day 2 | 326 | 6.9 | 75% | 8.3 | .05 | | |

The boiler treatment composition of the present invention maintained a very high condensate pH and boiler sulfite residual. The maximum pH the equipment could test at was 8.3 to 8.4. This pH is met and in most applications exceeded with this treatment program.

Example 2

A 150 horsepower (110 kW) Cleaver Brooks boiler was tested operating at 90 psi (620 kN/m$^2$) with no continuous blow down. Dual tank softeners were employed. The boiler operates one hour per day on hard water. Prior to use of the present invention the boiler included 1/4 to 1/8 inch (6.5 to 3.2 mm) scale deposits over the entire tube surface. Iron oxide in the hematite state covered over 50% of the surface. The scale consisted of 13.2% iron as $Fe_2O_3$, 39.6% calcium as CaO, 13.5% silica as $SiO_2$, 25.0% phosphate as $P_2O_5$, and 4.7% carbonate. The make up water in this system had an M alkalinity as $CaCO_3$ of 152mg/l, a total hardness as $CaCO_3$ of less than 1mg/l 23 hours per day and 80mg/l for one hour a day, the chloride was 28mg/l and silica as $SiO_2$ of 0.3mg/l. The sulphate as $SO_4$ was 70mg/l and conductance was 490 with a pH of 8.2. The conditions of the steam boiler and condensate from week 1 to week 8 were as follows:

TABLE II

| Date | Makeup Dosage mg/l | Cycles | % Condensate Return | Condensate pH Hot | Cold | $CO_2$ mg/l | Fe mg/l |
|---|---|---|---|---|---|---|---|
| Week 1 Day 1 | 141 | 14 | 60 | 5.1 | | | 0.13 |
| Week 2 Day 3 | 147 | 12.2 | 60 | 5.1 | | | 0.44 |
| Week 6 Day 2 | 272 | 15 | 428 | 7.54 | | | 0.17 |
| Week 8 Day 3 | 290 | 20.2 | 33.38 | 6.8 | | | 0.12 |

6

The treatment of the present invention raised the pH from 5.1 or less to a pH of 7.5 in a long condensate system typical of a hospital. The good pH readings along with poor control of the cycle of concentrations indicate that if the system were better controlled the pH readings would be excellent to great. The present invention did a good job in a system with an excess of 150 M alkalinity at 90 psi. (620 kN/m$^2$).

Example 3

The above composition was used on a 100 horsepower (74 kW) North America boiler having a condensate sample cooler. There was no continuous blow down and a single tank softener generally less than 2 parts per million total hardness. Prior to the test this boiler had a low condensate pH generally less than 5. The make up water had an M alkalinity as $CaCO_3$ of 95mg/l, a total hardness as $CaCO_3$ of less than 1mg/l, chloride 23mg/l, silica as $SiO_2$ 6mg/l, sulphate as $SO_4$ 6mg/l, TDS 360mg/l and pH 7.4. The water conditions of the steam boiler and condensate from week 1 to week 8 were as follows:

TABLE III

| Date | Makeup Dosage mg/l | Cycles | % Condensate Return | Condensate pH Hot | Cold | $CO_2$ mg/l Hot | Cold | Fe mg/l |
|---|---|---|---|---|---|---|---|---|
| Week 1 Day 1 | 287 | 7.8 | 8.6% | 7.3 | 5.3 | 5 | 22 | 0.55 |
| Week 2 Day 2 | 102 | 8.4 | | 9.0 | 5.7 | 0 | 27 | .20 |
| Week 6 Day 3 | | | 28% | 8.1 | 7.75 | 0 | 5 | |
| Week 7 Day 4 | | | 25% | 8.3 | 7.0 | 0 | 4.4 | |
| Week 8 Day 5 | 300 | | 40% | 8.3 | 7.57 | 0 | 3.2 | .12 |
| Week 8 Day 6 | | | | | | | | |

The composition of the present invention did an excellent job in raising the condensate pH from 5.3 to over 7.7 and lowering the free $CO_2$ to less than 3mg/l.

These examples demonstrate the effectiveness of the present invention over a wide range of make up water composition and equipment. Further the present invention is stable at higher concentrations making it useful as an all-in-one treatment composition for boiler water.

**Claims**

1. A concentrated all-in-one boiler water treatment composition characterised in that it comprises by weight

| Glucoheptonate | 0% to 0.2% |
|---|---|
| Sulfite | 0.1% to 14% |
| Polyhydroxy acid | 0.1 to 5% |
| Diethylaminoethanol | 0.0 to 15.0% |
| 1st polymer | 0.1 to 4% |
| Polymaleate | 0.01 to 4% |
| Carbonate | 0 to 7% |
| Water soluble base | 0 to 20% |
| Water | to 100% |

the sulfite being sodium or potassium sulfite; the 1st polymer is a polymethacrylate or polyacrylate; the carbonate is sodium carbonate or potassium carbonate and the polyhydroxy acid is an ascorbic acid or erythorbic acid.

2. A composition as claimed in claim 1 wherein the first polymer has a molecular weight of 500-5000 and the polymaleate has a molecular weight of 500-1000.

3. A composition as claimed in claim 1 or 2 wherein said first polymer is polymethacrylate.

4. A composition as claimed in any of the preceding claims wherein the sulfite is sodium sulfite and the carbonate is sodium carbonate.

5. A composition as claimed in any of the preceding claims wherein the polyhydroxy acid is ascorbic acid.

6. A composition as claimed in claim 1 comprising, by weight,

| Sodium Glucoheptonate | 0.01 to 0.2% |
|---|---|
| Sodium Sulfite | 1.0 to 10% |
| Sodium Carbonate | 0.01 to 7% |
| Ascorbic Acid | 0.1 to 5% |
| Polymethacrylate having a molecular weight of 500-5000 | 0.1 to 4% |
| Polymaleate acid having a molecular weight of 500-1000 | 0.1 to 4% |
| Diethylaminoethanol | 0.1 to 15% |
| Sodium hydroxide | 10 to 20% |
| Water | to 100% |

**Revendications**

1. Composition concentrée universelle de traitement d'eau de chaudière **caractérisée en ce qu'**elle comporte par poids:

| Glucoheptonate | 0% à 0,2% |
|---|---|
| Sulfite | 0,1% à 14% |
| Acide polyhydroxy | 0,1 à 5% |
| Diéthyleamino méthanol | 0 à 15,0% |
| 1er polymère | 0,1 à 4% |
| Polymaléate | 0,01 à 4% |
| Carbonate | 0 à 7,0% |
| Base soluble à l'eau | 0 à 20,0% |
| Eau | jusqu'à 100% |

le sulfite étant un sulfite de soude ou de potasse; le 1er polymère étant un polyméthacrylate ou polyacrylate; le carbonate étant un carbonate de soude ou de potasse et l'acide polyhydroxy étant un acide ascorbique ou un acide érythorbique.

2. Composition selon la revendication 1, dont le premier polymère comporte un poids moléculaire de 500-5000 et le polymaléate comporte un poids moléculaire de 500-1000.

3. Composition selon la revendication 1 ou 2 dont le premier polymère est un polyméthacrylate.

4. Composition selon l'une ou l'autre des revendications précédentes dont le sulfite est le sulfite de soude et le carbonate est le carbonate de soude.

5. Composition selon l'une ou l'autre des revendications précédentes dont l'acide polyhydroxy est l'acide ascorbique.

6. Composition selon la revendication 1 comportant par poids:

| Glucoheptonate de soude | 0,01% à 0,2% |
|---|---|
| Sulfite de soude | 1,0 à 10% |
| Carbonate de soude | 0,01 à 7% |
| Acide ascorbique | 0,1 à 5% |
| Polyméthacrylate de poids moléculaire 500-5000 | 0,1 à 4% |
| Acide polymaléate de poids moléculaire 500-5000 | 0,1 à 4% |
| Diéthyleaminoéthanol | 0,1 à 15% |
| Hydroxyde de soude | 10 à 20% |
| Eau | jusqu'à 100% |

**Patentansprüche**

1. Konzentrierte alles enthaltende Zusammensetzung für die Behandlung von Kesselwasser, dadurch gekennzeichnet, dass sie folgendes in Gewichtsprozent enthält:

| Glucoheptonat | 0% bis 0,2% |
|---|---|
| Sulfit | 0,1% bis 14% |
| Polyhydroxysäure | 0,1 bis 5% |
| Diethylaminoethanol | 0,0 bis 15,0% |
| ein erstes Polymer | 0,1 bis 4% |
| Polymaleat | 0,01 bis 4% |
| Carbonat | 0 bis 7% |
| eine wasserlösliche Base | 0 bis 20% |
| Wasser | bis 100% |

wobei das Sulfit Natrium oder Kaliumsulfit ist; das erste Polymer ein Polymethacrylat oder Polyacrylat ist; das Carbonat Natriumcarbonat oder Kaliumcarbonat und die Polyhydroxysäure eine Ascorbinsäure oder D-Araboascorbinsäure ist.

2.  Zusammensetzung nach Anspruch 1, in der das erste Polymer ein Molekulargewicht von 500-5000 und das Polymaleat ein Molekulargewicht von 500-1000 hat.

3.  Zusammensetzung nach Anspruch 1 oder 2, in der das erste Polymer Polymethacrylat ist.

4.  Zusammensetzung nach einem der vorhergehenden Ansprüche, in der das Sulfit Natriumsulfit und das Carbonat Natriumcarbonat ist.

5.  Zusammensetzung nach einem der vorhergehenden Ansprüche, in der die Polyhydroxysäure Ascorbinsäure ist.

6.  Zusammensetzung nach Anspruch 1, die folgendes in Gewichts% enthält:

| | |
|---|---|
| Natriumglucoheptonat | 0,01 bis 0,2% |
| Natriumsulfit | 1,0 bis 10% |
| Natriumcarbonat | 0,01 bis 7% |
| Ascorbinsäure | 0,1 bis 5% |
| Polymethacrylat mit einem Molekulargewicht von 500-5000 | 0,1 bis 4% |
| Polymaleatsäure mit einem Molekulargewicht von 500-1000 | 0,1 bis 4% |
| Diethylaminoethanol | 0,1 bis 15% |
| Natriumhydroxid | 10 bis 20% |
| Wasser | bis 100% |